# DEMANDE DE BREVET EUROPEEN

(11) **EP 1 217 227 A1**
(43) Date de publication de la demande: **26.06.2002**
(21) Numéro de dépôt: 01402906.0
(22) Date de dépôt: 13.11.2001
(51) Int. Cl.: F16B 13/12

(54) **Cheville à douille expansible pour matériau dur**

(30) Priorité: 20.12.2000 FR 0016654
(71) Demandeur: SOCIETE DE PROSPECTION ET D'INVENTIONS TECHNIQUES SPIT, 26501 Bourg-Les-Valence Cédex (FR)
(72) Inventeur: Gauthier, Alain, 07300 Saint Jean de Muzols (FR)
(74) Mandataire: Bloch, Gérard

(57) **Abrégé**

La douille expansible (1) de la cheville comporte un alésage intérieur (13) et un noyau d'expansion (15) coniques, sensiblement de même conicité et agencés pour, par effet de coin provoqué par enfoncement du noyau (15) dans la douille (1), provoquer son expansion. La douille (1) comporte, à sa périphérie, une gorge annulaire d'affaiblissement (9) destinée à raccourcir en cours d'expansion sa longueur axiale d'expansion.

## Description

L'invention concerne une cheville à douille expansible et noyau d'expansion ; la douille comporte une jupe expansible avec des fentes axiales et, entre les fentes, des jambes d'expansion qui ménagent entre elles un alésage axial conique, qui converge vers les extrémités libres des jambes ; le noyau d'expansion est également conique, de même conicité que l'alésage conique de la jupe expansible dans lequel il est monté; par un effet de coin, provoqué par un enfoncement du noyau d'expansion dans l'alésage de la jupe expansible, les jambes pivotent et la jupe s'expanse pour s'ancrer dans la paroi du matériau récepteur.

De telles chevilles sont bien adaptées aux matériaux de type béton. Dans le cas d'un matériau faible, aucun problème ne se pose. Par contre, dans le cas d'un matériau fort et du fait de la fermeté des jambes et du matériau, on ne peut plus enfoncer suffisamment le noyau dans la jupe et son expansion est trop faible pour provoquer un ancrage correct.

L'invention vise à résoudre ce problème.

A cet effet, l'invention concerne une cheville pour matériau dur à douille expansible à alésage intérieur et noyau d'expansion coniques, sensiblement de même conicité et agencés pour, par effet de coin provoqué par enfoncement du noyau dans la douille, provoquer son expansion, cheville caractérisée par le fait qu'elle comporte des moyens agencés pour raccourcir en cours d'expansion la longueur axiale d'expansion de la douille expansible.

Ainsi, si on raccourcit fonctionnellement la douille, le noyau peut être enfoncé plus complètement et réaliser une expansion correcte sur la portion axiale fonctionnelle de la douille engagée par le noyau.

De préférence, les moyens de raccourcissement de la douille sont agencés pour pouvoir enfoncer le noyau au-delà de l'extrémité d'expansion de la douille.

Avantageusement, les moyens de raccourcissement sont agencés pour raccourcir la longueur d'expansion de la douille par compression radiale d'une portion axiale de pied de la douille.

Dans la forme de réalisation préférée de la cheville de l'invention, les moyens de raccourcissement comprennent une gorge annulaire d'affaiblissement ménagée à la périphérie de la douille, au-delà de laquelle la portion axiale de pied de la douille comporte un alésage intérieur à conicité au moins infléchie par rapport à celle du noyau.

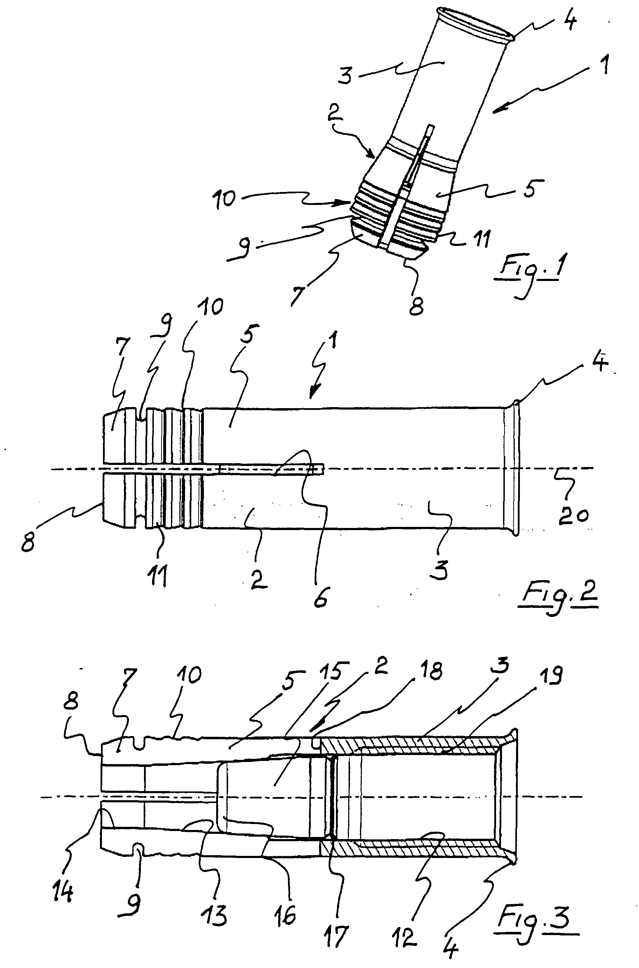

L'invention sera mieux comprise à la lecture de la description suivante de la forme de réalisation préférée de la cheville, en référence au dessin annexé, sur lequel
- la figure 1 est une vue en perspective de la cheville en expansion ;
- la figure 2 est une vue de profil de la cheville ;

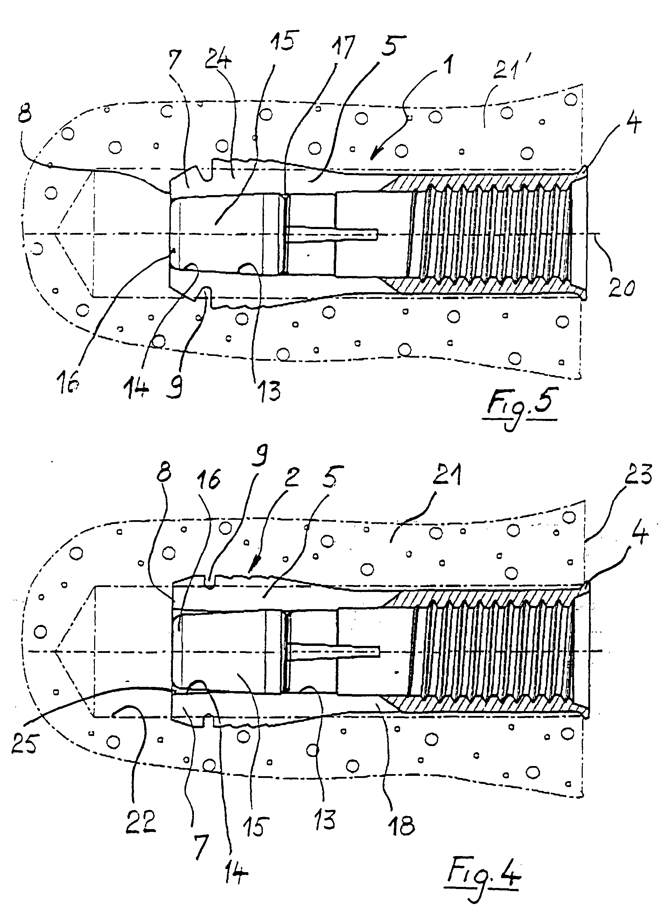

- la figure 3 est une vue en coupe axiale de la cheville ;
- la figure 4 est une vue en coupe axiale de la cheville, après ancrage dans un matériau faible et
- la figure 5 est une vue de coupe axiale de la cheville, après ancrage dans un matériau fort.

La cheville comporte une douille expansible 1, d'axe 20, avec une jupe expansible 2 prolongeant une portion de corps cylindrique 3, à l'extrémité libre de laquelle est formée une collerette de tête 4 de pose et de retenue de la cheville dans un trou de réception du matériau support. La jupe 2 comporte des jambes d'expansion 5 ménagées entre des fentes 6 s'étendant globalement dans des plans axiaux de la douille.

La douille comporte une portion axiale de pied 7, déformable par compression radiale, qui s'étend entre l'extrémité 8 de la douille et une gorge annulaire d'affaiblissement 9 ménagée à la périphérie de la douille. En deçà de la gorge d'affaiblissement 9, s'étend, vers le corps 3 de la douille, une portion axiale d'accrochage 10 pourvue de gorges ou rainures périphériques 11, pour améliorer l'accrochage de la douille dans le matériau support.

A l'intérieur de la douille est ménagé un alésage intérieur à trois portions dans le prolongement l'une de l'autre. La portion d'alésage 12 de la portion de corps 3 de la douille est cylindrique. La portion d'alésage 13 de la jupe expansible 2, en deçà de la portion de pied 7, et au-delà de la portion de corps 3, qui prolonge la portion d'alésage cylindrique 12, est conique, en convergeant vers la portion de pied 7 et l'extrémité 8 de la douille. Enfin, la portion d'alésage 14 de la portion de pied 7, qui prolonge la portion d'alésage conique 13, est cylindrique. Plus généralement, et pour une raison qui apparaîtra plus loin, la conicité de l'alésage de la portion de pied 7 est au moins infléchie par rapport à celle de l'alésage 13. Cette conicité peut être inférieure, nulle (l'alésage est alors cylindrique), voire même inversée, l'alésage divergeant alors vers l'extrémité 8 de la douille.

L'alésage 12 de la portion de corps 3 comporte un taraudage 19 s'étendant depuis la collerette 4 jusque légèrement en-deçà des zones d'articulation 18 des jambes 5.

Au repos, la cheville est extérieurement globalement cylindrique. L'épaisseur radiale des jambes d'expansion 5 croit légèrement depuis leur zone 18 d'articulation à la portion de corps 3 jusqu'à la gorge d'affaiblissement 9, c'est-à-dire sur la longueur axiale d'expansion de la douille.

La cheville comporte aussi un noyau d'expansion 15, de forme conique, sensiblement de même conicité que l'alésage 13 de la jupe expansible 2. Il est légèrement chanfreiné à l'extrémité avant 16. Il est prévu à l'arrière un paillon 17 de retenue du noyau.

Ayant décrit la cheville, abordons maintenant son fonctionnement.

Ayant préalablement foré dans un matériau 21, auquel on doit fixer une pièce par l'intermédiaire de la cheville, un trou 22 de profondeur plus grande que la longueur axiale de la cheville et de diamètre très faiblement supérieur à celui de l'enveloppe extérieure cylindrique de la' cheville, on l'introduit dans le trou 22 jusqu'à ce que la collerette 4 vienne en appui contre la surface 23 du matériau.

Puis à l'aide d'un outil approprié, on enfonce par frappe le noyau d'expansion 15, qui se trouvait à l'intérieur de la douille, retenu par le paillon 17 légèrement en-deçà des zones d'articulation 18. La conicité du noyau 15 et de la portion d'alésage 13 à l'intérieur des jambes 5 étant la même, par un effet de coin, les jambes 5 pivotent vers l'extérieur autour de leurs zones d'articulation 18, la jupe 2 s'expanse et s'ancre dans le matériau 21.

Dans un matériau faible (figure 4), le noyau 15 peut être facilement enfoncé jusqu'à ce que son chanfrein 16 atteigne par exemple l'extrémité 8 de la portion de pied 7 de la douille, les jambes 5, du fait de leur fermeté et rigidité, s'étant enfoncées radialement dans le matériau 21 sur une épaisseur parfaitement suffisante pour assurer un ancrage satisfaisant.

Dans un matériau fort (figure 5), la fermeté des jambes 5 aurait empêché l'enfoncement du noyau 15 et donc la pénétration radiale dans le matériau 21' progressivement croissante le long de l'axe 20 des jambes d'expansion 5. En tout état de cause, il aurait fallu que les portions de pied 7 des jambes 5 pénètrent dans le matériau 21' sur une épaisseur trop importante pour qu'au moins la partie du noyau 15, adjacente à son paillon de retenue 17, atteigne sensiblement les portions axiales 24 des jambes d'expansion 5 adjacentes à la gorge 9 et que ces portions 24 puissent déjà elles-mêmes pénétrer dans le matériau 21' sur l'épaisseur suffisante pour assurer l'ancrage.

La gorge d'affaiblissement 9 va permettre, lors de l'enfoncement du noyau 15, de raccourcir fonctionnellement la douille de la portion de pied 7, s'étendant au-delà de la gorge 9. La gorge 9, lors de l'expansion, raccourcit fonctionnellement, ou virtuellement, la longueur axiale d'expansion de la douille qui ne s'étend plus que de sa collerette de tête 4 à la gorge d'affaiblissement 9 qui constitue alors l'extrémité d'expansion de la douille.

Quand le noyau atteint, dans l'alésage 13, la position dans laquelle les portions de pied 7 des jambes 5 devraient être repoussées dans le matériau 21' par le noyau, le matériau s'y oppose, sans pour autant empêcher que les portions 24 adjacentes à la gorge 9, en amont des portions 7 dans le sens d'enfoncement du noyau, ne soient elles repoussées, puisque les portions 7 vont pouvoir pivoter vers l'intérieur, autour de la zone de cette gorge 9, par rapport aux portions 24. Les portions de pied 7 des jambes 5 subissent ainsi une compression radiale. Du fait de l'inflexion de la conicité de l'alésage intérieur de la douille de part et d'autre du plan de la gorge 9, qui, de conique (13), comme le noyau 15, devient ici cylindrique (14), l'extrémité avant 16 du noyau 15 va même pouvoir être enfoncée sur une distance axiale suffisante, au-delà du plan de la gorge, et atteindre ici l'extrémité avant 8 de la douille pour assurer l'engagement parfait des portions de jambe 24 par le noyau 15, comme dans un matériau faible ; la contre-dépouille annulaire 25 ainsi créée autour du noyau 15 (figure 4), de plus grande conicité que l'alésage cylindrique 14 dans lequel il se trouve, permet précisément la compression radiale de la portion de pied 7 de la douille.

Après avoir ancré la cheville, il suffit, pour fixer la pièce, de visser dans le taraudage 19 une vis ou boulon de fixation.

## Revendications

1. Cheville pour matériau dur à douille expansible (1) à alésage intérieur (13) et noyau d'expansion (15) coniques, sensiblement de même conicité et agencés pour, par effet de coin provoqué par enfoncement du noyau (15) dans la douille (1), provoquer son expansion, cheville **caractérisée par le fait qu'**elle comporte des moyens (9, 25) agencés pour raccourcir en cours d'expansion la longueur axiale d'expansion de la douille expansible (1).

2. Cheville selon la revendication 1, dans laquelle les moyens (9, 25) de raccourcissement de la douille (1) sont agencés pour pouvoir enfoncer le noyau (15) au-delà de l'extrémité d'expansion (9) de la douille (1).

3. Cheville selon l'une des revendications 1 et 2, dans laquelle les moyens de raccourcissement (9, 25) sont agencés pour raccourcir la longueur d'expansion de la douille (1) par compression radiale d'une portion axiale de pied (7) de la douille (1).

4. Cheville selon l'une des revendications 1 à 3, dans laquelle les moyens de raccourcissement comprennent une gorge annulaire d'affaiblissement (9) ménagée à la périphérie de la douille (1), au-delà de laquelle la portion axiale de pied (7) de la douille (1) comporte un alésage intérieur (14) à conicité au moins infléchie par rapport à celle du noyau (15).

5. Cheville selon la revendication 4, dans laquelle l'alésage intérieur (14) de la douille (1), au-delà de la gorge annulaire d'affaiblissement (9), est cylindrique.

6. Cheville selon l'une des revendications 1 à 5, dans laquelle la douille (1) comportent des jambes d'expansion (5) ménagées entre des fentes (6), dont l'épaisseur radiale est croissante sur la longueur axiale d'expansion de la douille (1).

7. Cheville selon l'une des revendications 1 à 6, dans laquelle il est prévu une portion axiale périphérique d'accrochage (10) en-deçà des moyens de raccourcissement (9).
